# EUROPEAN PATENT APPLICATION

(11) **EP 2 919 546 A1**
(43) Date of publication of application: **16.09.2015**
(21) Application number: 15152422.0
(22) Date of filing: 26.01.2015
(51) Int. Cl.: H04W 74/08, H04W 74/00

(54) **Coordination of RTS-CTS in wireless network**

(30) Priority: 12.03.2014 FI 20145228
(71) Applicant: Nokia Corporation, 02610 Espoo (FI)
(72) Inventor: Kneckt, Jarkko, 02330 Espoo (FI)
(74) Representative: Nokia Corporation

(57) **Abstract**

This document discloses a solution for mandating use of additional protection for data transmissions. In an embodiment, a method comprises: determining, by a first wireless device of a wireless network, that at least a second wireless device must transmit a request-to-send frame before transmitting a data frame; and transmitting, in response to said determining, a frame comprising an information element commanding at least the second wireless device to transmit the request-to-send frame before transmitting a data frame.

## Description

### TECHNICAL FIELD

The invention relates to a field of wireless networks and, particularly, to coordinating request-to-send (RTS) and clear-to-send (CTS) signalling in a wireless network.

### TECHNICAL BACKGROUND

Some wireless networks employ request-to-send (RTS) signalling mechanism to protect data transmissions. A device may use an RTS frame to announce an intention to transmit a data frame, and the RTS frame may be addressed to a recipient of the data frame. The recipient may respond with a clear-to-send (CTS) frame if the data transmission is acceptable to it. A third device detecting the RTS-CTS exchange may suspend its channel access for the duration of the data transmission, thus reducing the probability of collisions.

### BRIEF DESCRIPTION

The invention is defined by the independent claims.

Embodiments are defined in the dependent claims.

### BRIEF DESCRIPTION OF THE DRAWINGS

In the following the invention will be described in greater detail by means of preferred embodiments with reference to the accompanying drawings, in which
Figure 1 illustrates a wireless communication scenario to which embodiments of the invention may be applied;
Figure 2 illustrates a signalling diagram of mandated use of an RTS-CTS mechanism in a wireless network according to an embodiment of the invention;
Figure 3 illustrates a process for determining a restricted access window in which the use of the RTS-CTS mechanism is mandated according to an embodiment of the invention;
Figure 4 illustrates a signalling diagram of using determined conditions under which the use of the RTS-CTS mechanism is mandated according to an embodiment of the invention;
Figure 5 illustrates forwarding a command to use the RTS-CTS mechanism between wireless networks according to an embodiment of the invention; and
Figures 6 and 7 illustrate block diagrams of apparatuses according to some embodiments of the invention.

### DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

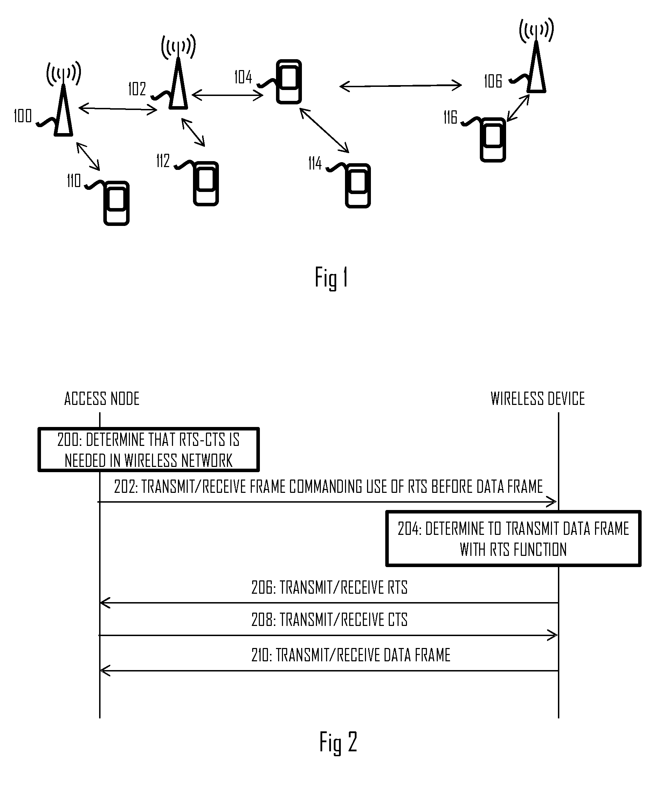

A general wireless communication scenario to which embodiments of the invention may be applied is illustrated in Figure 1. Figure 1 illustrates wireless communication devices comprising access points (AP) 100, 102, 104, 106 and a plurality of terminal devices (STA) 110, 112, 114, 116. The AP may be a stationary access point 100, 102, 106 or a mobile access point 104. A general term used in this specification and encompassing both the APs and STAs is a wireless device. The access point may refer to an access point specified in IEEE 802.11 specifications or to a base station of another wireless access network. The mobile access point 104 may have a functionality of a STA as well. A common term encompassing both the stationary APs 100, 102, 106 and mobile APs 104 is an access node. An access node may provide or be comprised in a basic service set (BSS) which is a basic building block of an IEEE 802.11 wireless local area network (WLAN). Each access node may represent a different BSS. A single access node may, however, establish a plurality of BSSs. The most common BSS type is an infrastructure BSS that includes a single access node together with all STAs associated with the access node. The access node may provide access to other networks, e.g. the Internet. In another embodiment, the BSSs may be connected with each other by a distribution system (DS) to form an extended service set (ESS). An independent BSS (IBSS) is formed by an ad hoc network of terminal devices without a stationary controlling AP. In a context where two BSSs have overlapping coverage areas, one BSS may be considered as an overlapping BSS (OBSS) from the viewpoint of the other BSS. While embodiments of the invention are described in the context of the above-described topologies of IEEE 802.11, it should be appreciated that these or other embodiments of the invention may be applicable to wireless networks based on other specifications, e.g. WiMAX (Worldwide Interoperability for Microwave Access), UMTS LTE (Long-term Evolution for Universal Mobile Telecommunication System), mobile ad hoc networks (MANET), mesh networks, and other networks having cognitive radio features, e.g. transmission medium sensing features and adaptive capability to coexist with radio access networks based on different specifications and/or standards. Some embodiments may be applicable to networks having features under development by other IEEE task groups. Therefore, the following description may be generalized to other systems as well.

The different access nodes may operate at least partly on different channels, e.g. on different frequency channels. IEEE 802.11n specification specifies a data transmission mode that includes 20 megahertz (MHz) wide primary and secondary channels. The primary channel is used in all data transmissions with clients supporting only the 20 MHz mode and with clients supporting higher bandwidths. A further definition in 802.11n is that the primary and secondary channels are adjacent. The 802.11n specification also defines a mode in which a STA may, in addition to the primary channel, occupy one secondary channel which results in a maximum bandwidth of 40 MHz. IEEE 802.11ac task group extends such an operation model to provide for wider bandwidths by increasing the number of secondary channels from 1 up to 7, thus resulting in bandwidths of 20 MHz, 40 MHz, 80 MHz, and 160 MHz. A 40 MHz transmission band may be formed by two contiguous 20 MHz bands, and an 80 MHz transmission band may be formed by two contiguous 40 MHz bands. However, a 160 MHz band may be formed by two contiguous or non-contiguous 80 MHz bands. Different BSSs may employ different primary channels.

As mentioned above, the transmission band of a BSS contains the primary channel and zero or more secondary channels. The secondary channels may be used to increase data transfer capacity of a transmission opportunity (TXOP). The secondary channels may be called a secondary channel, a tertiary channel, a quaternary channel, etc. However, let us for the sake of simplicity use the secondary channel as the common term to refer also to the tertiary or quaternary channel, etc. The primary channel may be used for channel contention, and a TXOP may be gained after successful channel contention on the primary channel. Some IEEE 802.11 networks are based on carrier sense multiple access with collision avoidance (CSMA/CA) for channel access. Some networks may employ enhanced distributed channel access (EDCA) which provides quality-of-service (QoS) enhancements to medium access control (MAC) layer. The QoS enhancements may be realized by providing a plurality of access categories (AC) for prioritizing frame transmissions. The access categories may comprise the following priority levels in the order of increasing priority: background (AC_BK), best effort (AC_BE), video streaming (AC_VI), and voice (AC_VO). A higher priority frame transmission may use a shorter contention window and a shorter arbitration inter-frame spacing (AIFS) that result in higher probability of gaining the TXOP. Furthermore, some networks may employ restricted access windows (RAW) where a reduced set of wireless devices of the wireless network may carry out channel contention. The access node may define the RAW and a group of wireless devices that are allowed to attempt the channel access within the RAW. Grouping allows partitioning of the wireless devices into groups and restricting channel access only to wireless devices belonging to a specified group at any given time period. The time period may be enabled by allocating slot duration and a number of slots in RAW access. The grouping may help to reduce contention by restricting access to the medium only to a subset of the wireless devices. The grouping may also reduce the signalling overhead.

As described above, the BSS may be represented by the access node and one or more terminal devices connected to the access node. In the example of Figure 1, the access node 100 and the terminal device 110 may be comprised in a first BSS, the access node 102 and the terminal device 112 may be comprised in a second BSS which is a one-hop neighbour to the first BSS and an OBSS with respect to the first BSS. The first BSS and the second BSS may be overlapping BSSs in the sense that at least some of the devices first BSS are capable of receiving frames from the second BSS and vice versa. The access node 104 and the terminal device 114 form a third BSS which is a two-hop neighbour to the first BSS through the second BSS. The third BSS may be an OBSS with respect to the second BSS but not necessarily to the first BSS. The access node 106 and the terminal device 116 form a fourth BSS which is a three-hop neighbour to the first BSS through the second and third BSS. The fourth BSS may be an OBSS with respect to the second BSS but not necessarily to the first BSS and/or second BSS.

A terminal device may establish a connection with any one of the access nodes it has detected to provide a wireless connection within the neighbourhood of the terminal device. In the example of Figure 1, the terminal device 110 is located within the coverage area of the access node 100 so it may establish a connection to that access node 100. Similarly, the terminal device 114 may establish a connection to the access node 104 and so on, as indicated by the bidirectional arrows in Figure 1. The connection establishment may include authentication in which an identity of the terminal device is established in the access node. The authentication may comprise exchanging an encryption key used in the BSS. After the authentication, the access node and the terminal device may carry out association in which the terminal device is fully registered in the BSS, e.g. by providing the terminal device with an association identifier (AID). It should be noted that in other systems terms authentication and association are not necessarily used and, therefore, the association of the terminal device to an access node should be understood broadly as establishing a connection between the terminal device and the access node such that the terminal device is in a connected state with respect to the access node and scanning for downlink frame transmissions from the access node and its own buffers for uplink frame transmissions.

In a conventional 802.11 network, a wireless device initiating a TXOP may transmit a frame that triggers a network allocation vector (NAV). The frame may be a management frame such as a request-to-send (RTS) frame or a data frame. The frame may comprise a Duration field defining the duration of the NAV. Any other wireless device detecting the frame and extracting the Duration field suspends access to the same channel for the duration of the NAV. This mechanism reduces collisions. The 802.11 networks may employ another collision avoidance mechanism called clear-channel assessment (CCA). A wireless device trying to access the channel scans for the channel before the access. If the channel is sensed to contain radio energy that exceeds a CCA threshold, the wireless device refrains from access the channel. If the channel is sensed to be free and no NAV is currently valid, the wireless device may access the channel. A preliminary handshake preceding the TXOP by using the RTS message further reduces the collisions. The transmission of the RTS frame triggers the NAV for the duration of the RTS frame and a response frame that responds to the RTS frame, e.g. a clear-to-send (CTS) frame. With the RTS-CTS handshake, the channel is cleared from other channel accesses and the TXOP may be started after the reception of the response to the RTS with a reduced risk for collisions.

In a conventional solution, the use of RTS-CTS signaling is coordinated separately and autonomously in each wireless device. The wireless device may employ a threshold for using RTS-CTS signaling, and the threshold may be defined as the number of octets of the transmitted physical layer convergence protocol (PLCP) protocol data unit (PPDU). The RTS-CTS signaling may silence the channel for a certain period of time during which the PPDU transmission may be carried out. The RTS CTS may be taken into use when the wireless device suffers from interference caused by hidden node problems. In some cases the transmission may collide with another transmission without noticing it. In dense network deployments, RTS-CTS signaling may reduce the interference variation. Furthermore, throughput may improve when the RTS-CTS signaling is taken into use.

Figure 2 illustrates a signalling diagram of a procedure in which the access node may command at least one other wireless device to employ the RTS-CTS signalling before the data transmissions. Referring to Figure 2, the access node determines that at least one wireless device must transmit a request-to-send frame before transmitting a data frame (block 200). In step 202, the access node transmits, in response to said determining, a frame comprising an information element commanding a wireless device to transmit the request-to-send frame before transmitting a data frame. Upon receiving the frame in step 202, the wireless device may, in response to detecting said information element in the frame, cause transmission of a data frame only after transmitting a request-to-send frame. Let us assume that the wireless device is about to initiate data transmission to the access node. Complying with the command, the wireless device transmits an RTS frame in step 206. Upon receiving the RTS frame in step 206, the access node may determine whether or not channel reservations or NAVs are currently pending. If the channel is sensed to be free, the access node may transmit a CTS frame to the wireless device in step 208. On the other hand, if the channel is sensed to be occupied, the access node may refrain from transmitting the CTS and, upon receiving no CTS, the wireless device may refrain from data transmission and avoid collision, thus avoiding collision and improving overall performance. Upon receiving the CTS in step 208, the wireless device may transmit the data frame in step 210 under the protection caused by the prior RTS frame. This mechanism avoids the hidden node problems because the access node announces the coming data transmission with the transmission of the CTS frame. Accordingly a third wireless device not detecting the RTS frame but detecting the CTS may refrain from colliding transmissions.

In an embodiment, the frame comprising the command to use the RTS before the data transmission is a control frame or a management frame.

In an embodiment, the frame comprising the command to use the RTS before the data transmission is a beacon frame.

In an embodiment, the frame comprising the command to use the RTS before the data transmission is a response frame responding to a request frame received by the access node from a wireless device.

In an embodiment, the frame comprising the command to use the RTS before the data transmission is a probe response frame.

In an embodiment, the frame comprising the command to use the RTS before the data transmission is an authentication response frame.

In an embodiment, the frame comprising the command to use the RTS before the data transmission is an association response frame.

In an embodiment, the execution of block 200 may be triggered by the access node detecting a request for the RTS-CTS protection from a terminal device of its wireless network. A terminal device may be configured to request for the RTS-CTS protection in the wireless network upon detecting poor performance in data transmissions, for example, or on the basis of another criterion.

In an embodiment, the access node may determine in block 200 conditions under which the RTS-CTS signalling shall be used. When the conditions are not satisfied, each wireless device may independently determine whether or not to employ the RTS-CTS signalling before the data transmissions.

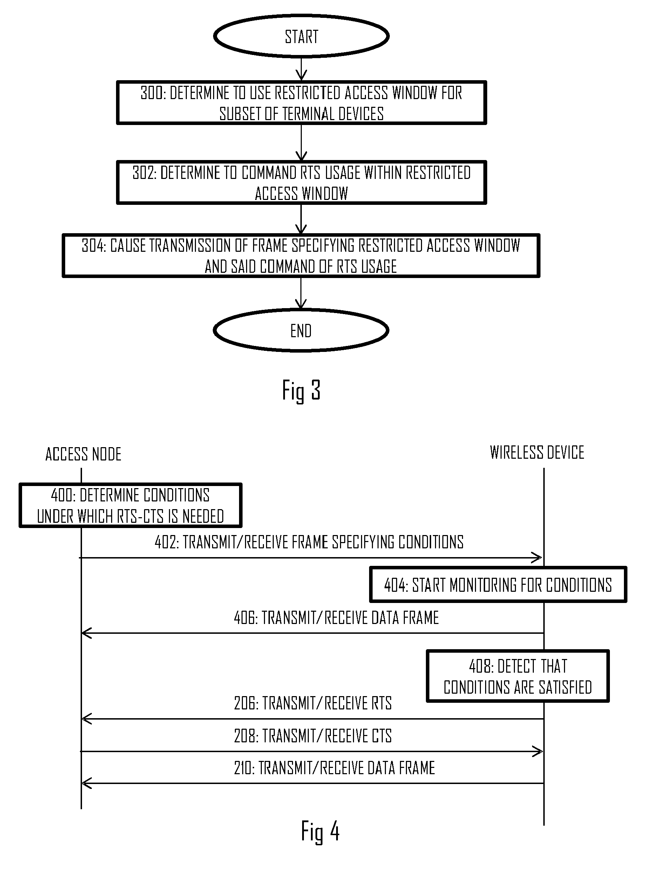

In an embodiment, the access node may determine to command the use of the RTS-CTS signalling in connection with the RAW. Outside the RAW, each wireless device may independently determine whether or not to employ the RTS-CTS signalling before the data transmissions. Figure 3 illustrates a process according to this embodiment. The process may be carried out in the access node. Referring to Figure 3, the access node may determine to use the RAW for a subset of terminal devices of its wireless network in block 300. The access node may select the terminal devices for the RAW in block 300. In block 302, the access node may determine that the RTS-CTS signalling shall be used within the RAW. As a consequence, the access node may in block 304 transmit a frame specifying the RAW group, the timing of the RAW, and a command to use the RTS-CTS signalling before all data transmissions within the RAW.

Figure 4 illustrates an embodiment of the Figure 2 about signalling in connection with conditions related to the use of the RTS-CTS mechanism. Referring to Figure 4, the access node determines in block 400 the conditions under which the RTS-CTS mechanism shall be used. Embodiments of the conditions are described below. In block 402, the access node transmits a frame specifying the conditions under which the RTS-CTS mechanism is obliged to be used. Upon receiving the frame in step 402, the wireless device stores the conditions and starts to monitor for the appearance of the conditions. When the conditions are not satisfied, the wireless device may carry out data transmissions without the RTS-CTS mechanism (step 406). However, upon detecting that the conditions are satisfied in block 408, the wireless device is obliged to take the RTS-CTS mechanism into use and transmit the data frame in step 210 only after the RTS-CTS-signaling (steps 206 and 208).

Let us now consider some embodiments of the conditions. The RAW is described above and, when the condition is the RAW, the wireless device may upon receiving the frame in step 402 determine whether or not the wireless device is included in the RAW group specified in the frame. If the wireless device is included in the RAW group, the wireless device may execute block 404 and start monitoring for the occurrence of the RAW. When the RAW is detected in block 408, the wireless device may activate the RTS-CTS mechanism and force transmission of the RTS frame before the data frame within the RAW. When the RAW ends, the wireless device may use other criteria for determining whether or not to employ the RTS-CTS mechanism, e.g. conventional solutions.

In an embodiment, the condition is received signal strength being less than a determined threshold. The access node may specify the threshold as the condition for obligated use of the RTS-CTS mechanism. Any wireless device detecting received signal strength of a signal received from another wireless device below the threshold must employ the RTS-CTS mechanism before carrying out data transmission to the other device. Accordingly, the wireless device may determine whether or not the RTS-CTS mechanism is obligatory per communication link. Some communication links providing the received signal strength above the threshold may not require the RTS-CTS mechanism. For the other communication link providing the received signal strength below the threshold, the wireless device is obliged to use the RTS-CTS mechanism. Upon receiving the frame in step 402, the wireless device may start monitoring the received signal strengths of communication links it has established. Accordingly, the wireless device may track of the communication link(s) that provide a poor communication quality, as indicated by the received signal strength being below the threshold. If such a communication link is detected and if the wireless device is about to carry out data transmission in over the communication link, it may be determined in block 408 that the conditions are satisfied and the RTS-CTS mechanism is triggered before carrying out the data transmissions. If the wireless device is about to carry out data transmission over a communication link providing received signal strength over the threshold, the conditions are not satisfied and the wireless device may use other criteria for determining whether or not to employ the RTS-CTS mechanism. The received signal strength as the condition may mandate terminal devices that are far away from the access node to use the RTS-CTS mechanism, while terminal devices close to the access node may carry out data frame transmissions without the prior transmission of the RTS frame.

In an embodiment, the conditions comprise a time interval during which the RTS-CTS mechanism is obligatory. Contrary to the embodiment using the RAW, the time interval may apply to all wireless devices of the wireless network or to a different subset than a subset of the RAW or any RAW. The access node may determine in block 400 a time interval during which the use of the RTS-CTS mechanism is obligatory and define the time interval in the frame transmitted in step 402. Upon receiving the frame in step 402, the wireless device may start monitoring for the occurrence of the specified time interval. Upon detecting the start of the time interval, the wireless device may activate the RTS-CTS mechanism for all data transmissions. Outside the time interval, the wireless device may use the other criteria for employing or not employing the RTS-CTS mechanism.

In an embodiment, the conditions comprise a channel on which the RTS-CTS mechanism is obligatory. The access node may determine in block 400 one or more channels on which the use of the RTS-CTS mechanism is obligatory and define the channel(s) in the frame transmitted in step 402. For example, the access node may detect that one or more channels are congested and, as a consequence, mandate the use of the RTS-CTS mechanism on those channels. The channels on which the use of the RTS-CTS mechanism is mandated may comprise all the channels of the wireless network of the access node or a subset of the channels of the wireless network. Upon receiving the frame in step 402, the wireless device may start monitoring for the usage of the specified channel(s). Upon detecting that the wireless device is about to carry out data transmission on the specified channel, the wireless device may activate the RTS-CTS mechanism for all data transmissions on the channel. On other channels, the wireless device may use the other criteria for employing or not employing the RTS-CTS mechanism.

As described above, the embodiments where the access node commands the use of the RTS-CTS mechanism overrule any other criteria for using the RTS-CTS mechanism. Upon detecting the command from the access node, the wireless device(s) may then disable any other criteria for the use of the RTS-CTS mechanism until the command has expired, is not valid, or is cancelled. When the command is not pending or valid, the wireless device may employ or activate the other criteria.

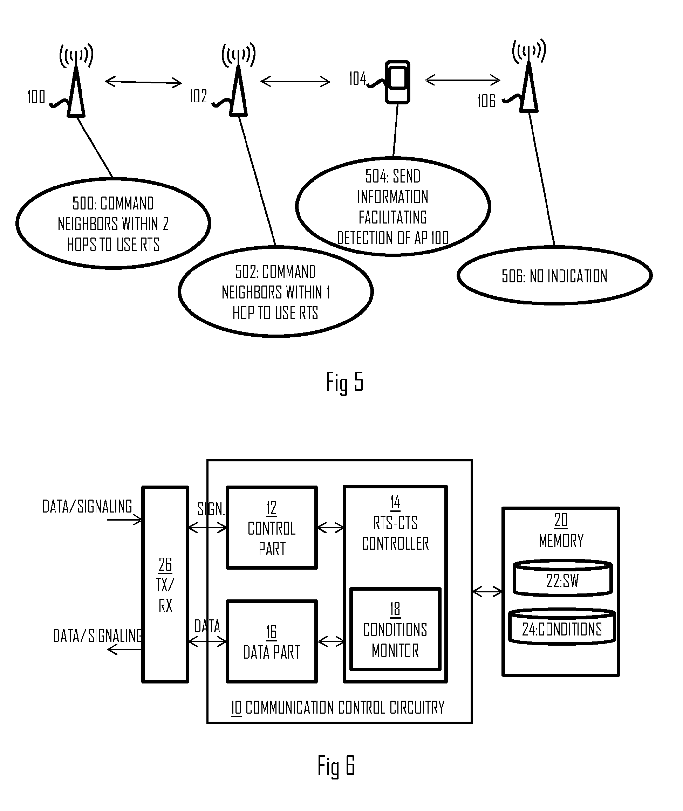

With respect to the OBSS situation, the access node may wish to mandate one or more other wireless networks to use the RTS-CTS mechanism in addition to the wireless devices of the BSS of the access node. The one or more other wireless networks may comprise another wireless network complying with the same specifications as the access node, e.g. the wireless network of the access node and the other wireless network may comply with IEEE 802.11 specifications. In such embodiments, the other wireless network may be an OBSS with respect to the wireless network of the access node or a neighbouring wireless network with respect to the wireless network of the access node. The one or more other wireless networks may comprise another wireless network complying with specifications different from those of the access node. In such embodiments, a node of the other wireless network may be configured to receive and extract control frames transmitted by the access node, e.g. the beacon frames transmitted by the access node. Figure 5 illustrates an embodiment where the access node 100 mandates the use of the RTS-CTS mechanism in neighbouring wireless networks. The access node may define the area of effect of the command in the frame commanding to use the RTS-CTS mechanism. The area of effect may be defined in terms of distance from the access node, and the metric may be a number of hops from the access node. Referring to Figure 1 and Figure 5, the access node 102 is a one-hop neighbour of the access node 102, the access node 104 is a two-hop neighbour, and the access node 106 is a three-hop neighbour. If the access node 104, 106 would be capable of detecting frames transmitted by the access node 100, they would be one-hop neighbours.

Referring to Figure 5, the access node 100 may determine that wireless devices of at least one neighbouring wireless network are commanded to use the RTS-CTS mechanism according to any one of the above-described embodiments. The access node 100 may further determine the area of effect, e.g. 1-hop and 2-hop neighbours in this example. As a consequence, the access node 100 may transmit the frame comprising the command to use the RTS-CTS mechanism. The frame may further comprise an information element indicating the area of effect of the command in terms of the number of hops from the access node 100. The terminal devices of the wireless network of the access node 100 and receiving the frame may force the use of the RTS-CTS mechanism as a response to the command. The access node 102 receiving the frame may extract the command from the frame and determine whether or not it is in the area of effect of the command. This may be detected from the information element indicating the area of effect. Upon detecting that the area of effect is two hops in this example, the access node 102 may determine that it is in the area of effect of the command and command the wireless devices of its wireless network to employ the RTS-CTS mechanism. As a consequence, the access node 102 may transmit a frame comprising the command and an area of effect of the command. With respect to the area of effect indicated by the access node 102, the access node 102 may decrement the area of effect in the frame it received and, thus, reduce the area of effect it announces by one hop. The frame transmitted by the access node 102 thus commands the use of the RTS-CTS mechanism within an area of effect that is one hop from the access node 102 and, effectively, two hops from the access node 100. A wireless device of the wireless network of the access node 102 detecting the frame thus forces the use of the RTS-CTS mechanism according to the command.

The access node 104 receiving the frame from the access node 102 receiving the frame may extract the command from the frame and determine whether or not it is in the area of effect of the command. This may be detected from the information element indicating the area of effect. Upon detecting that the area of effect is one hop in this example, the access node 104 may determine that it is in the area of effect of the command and command the wireless devices of its wireless network to employ the RTS-CTS mechanism. As a consequence, the access node 104 may transmit a frame comprising the command and an area of effect of the command. With respect to the area of effect indicated by the access node 104, the access node 104 may decrement the area of effect in the frame it received from the access node 102 and, thus, reduce the area of effect it announces by one hop. The frame transmitted by the access node 104 thus commands the use of the RTS-CTS mechanism within an area of effect that consists of the wireless network of the access node 104. A wireless device of the wireless network of the access node 104 detecting the frame thus forces the use of the RTS-CTS mechanism according to the command. The access node 106 receiving the frame from the access node 104 may extract the command from the frame and determine whether or not it is in the area of effect of the command. This may be detected from the information element indicating the area of effect. Upon detecting that the area of effect is only the wireless network of the access node 104, the access node 106 may determine that it is not in the area of effect of the command and, accordingly, the frame does not cause the access node 106 to mandate the use of the RTS-CTS mechanism in its wireless network.

In an embodiment, the access nodes 102, 104 are at least one-hop neighbours to the access node 100 that originated the command. Accordingly, the access nodes 102, 104 may add to the frame they transmit an information element facilitating detection of a frame transmitted by another access node that is at least one hop towards the access node 100 that originated the command. Such an information element may comprise any one of the following: a medium access control (MAC) address of the other access node, a BSS identifier (BSSID) of the other access node, and/or a target beacon transmission timing (TBTT) offset between the access nodes. For example, the access node 104 may add the MAC address or the BSSID of the access node 102 and/or the TBTT offset between the access nodes 104, 102 to the frame it transmits and comprises the command. As a consequence the terminal devices in the wireless network of the access node 104 may detect the frame transmission from the access node 102 in a facilitated manner and detect the possible changes in the conditions or the command to use the RTS-CTS mechanism. In a similar manner, the access node 102 may add the MAC address or the BSSID of the access node 100 and/or the TBTT offset between the access nodes 100, 102 to the frame it transmits and comprises the command. As a consequence the terminal devices in the wireless network of the access node 102 may detect the frame transmission from the access node 100 in a facilitated manner and detect the possible changes in the conditions or the command to use the RTS-CTS mechanism. It should be appreciated that terminal devices associated to the access node 102 and receiving the command from the access node 100 to employ the RTS-CTS mechanism in the neighbouring wireless networks may oblige to the command and start using the RTS-CTS mechanism in connection with their data transmissions. Accordingly, an access node 100 may have a capability of directly causing the terminal devices of a neighbouring wireless network to oblige to the command.

Let us now consider some embodiments of the frame comprising the command to use the RTS-CTS mechanism and, in some embodiments, other information elements. The frame may comprise an RTS-CTS control element comprising the command and, optionally, further information related to the command described below with reference to the Tables. The RTS-CTS control element may have at least some of the following information elements:

**Table 1**

| RTS-CTS Period Control | RTS Mandatory Period 0 | ... | RTS Mandatory Period N |
|---|---|---|---|
| 1 octet | 4-11 octets | ... | 4-11 octets |

The RTS-CTS Period Control field may indicate the periodicity of the validity of the command to use RTS-CTS mechanism. The field may also indicate the channels on which the RTS-CTS mechanism shall be applied. An embodiment of the RTS CTS Period Control field is shown in Table 2:

**Table 2**

| RTS-CTS Command Periodicity | Applied Channels | Reserved |
|---|---|---|
| 4 bits | 2 bits | 2 bits |

The RTS-CTS Command Periodicity field may have one value (e.g. 0) to indicate that the RTS-CTS mechanism shall be applied at all times. Other values, e.g. values 1 - 15, may indicate the number of RTS Mandatory Period fields following the RTS CTS Period Control field.

The Applied Channels field may indicate the channels to which the RTS-CTS command applies. The field may be used to indicate, for example, that the secondary channel comprises an overlapping BSS and data frames transmitted to the channel shall be preceded by RTS-CTS signalling. One value (e.g. 0) may indicate that RTS-CTS mechanism is commanded to be applied to all channels. Another value (e.g. 1) may indicate that the RTS-CTS mechanism shall be applied to the primary channel, the secondary channel, the tertiary channel, and quaternary channel. Another value, e.g. value 2, may indicate that the RTS-CTS mechanism shall be applied to the secondary channel and the tertiary channel only. Another value, e.g. value 3, may indicate that the RTS-CTS mechanism shall be applied to only to the secondary channel. In this manner, any channel combination may be indicated with a unique value and the RTS-CTS mechanism may be commanded to an arbitrary set of channels employed in the wireless network.

Table 3 below illustrates an embodiment of the RTS Mandatory Period field of Table 1:

**Table 3**

| RTS Coverage | Protection Period Offset from TBTT | Duration | RSSI Threshold | TBTT Offset of Commanding AP | BSSID of Commanding AP |
|---|---|---|---|---|---|
| 1 octet | 1 octet | 1 octet | 1 octet | 0 or 1 octet | 0 or 6 octets |

The RTS Coverage field may define the area of effect of the command, and it may have the following structure:

**Table 4**

| Repetition Mode | TBTT Offset Present | BSSID Present | Reserved |
|---|---|---|---|
| 2 bits | 1 bit | 1 bit | 4 bits |

The Repetition Mode field may have the following values. One value, e.g. 0, may indicate that the access node transmitting the frame is commanding or requesting 2-hop neighborhood to use the RTS-CTS mechanism before the data transmission. Another value, e.g. 1, may indicate that the access node is commanding or requesting to use RTS-CTS mechanism within 1-hop neighborhood. This value may also indicate that the access node is repeating the request of 2-hop neighborhood use of the RTS-CTS mechanism. Another value, e.g. 2, may indicate that the access node has detected one or more wireless devices that request to use RTS-CTS mechanism within 1-hop neighborhood. Yet another value, e.g. value 3, may indicate that the access node transmitting the frame is commanding the use of the RTS-CTS mechanism only in the wireless network of the access node. Accordingly, the command may not extend to the neighboring wireless networks receiving the frame.

The TBTT Offset Present field may indicate when the TBTT Offset of commanding AP field is included in the RTS Mandatory Period field.

The BSSID Present field may indicate when the BSSID of Commanding AP field is included in the RTS Mandatory Period field.

Referring to Table 3, the Protection Period Offset from TBTT may indicate the number of milliseconds from the TBTT to the start of the time interval when the RTS-CTS mechanism shall be employed. The time interval to use the RTS-CTS mechanism may start after the offset and it may be periodic with the periodicity of the TBTT.

The Duration may indicate as the length of the time interval when the RTS-CTS mechanism shall be used, e.g. as the number of milliseconds.

The received signal strength indicator (RSSI) threshold may set a criterion for the links to which the RTS-CTS mechanism shall be applied. If a terminal device receives beacons from its access nodes with a reception power that is lower than -90 dBm + value of the RSSI Threshold, for example, the terminal device shall be obliged to use the RTS-CTS mechanism before the data transmission. One or more values, e.g. 128 - 255, may indicate that the terminal device shall use the RTS-CTS mechanism regardless of the RSSI of the frames received from the access node. The RSSI threshold may apply not only to the wireless devices of the wireless network of the access node originating the command but also to the wireless devices of the other wireless networks mandated by the command.

In other embodiments, the RSSI threshold may apply only to the wireless devices of the wireless network of the access node originating the command. In such embodiments, an access node detecting the command in which the RSSI threshold is set, the access node may reset the RSSI threshold or indicate that the RSSI threshold is not a condition for the command in the frame it transmits. Accordingly, the RSSI threshold is not applied as the condition for the RTS-CTS use by the terminal devices served by the access node.

The TBTT Offset of the Commanding AP field may indicate the number of milliseconds between the TBTT of the access node that originated command to use the RTS-CTS mechanism and the access node that transmitted the frame comprising this information element. The wireless device receiving the frame may use the field to receive a beacon from the access node that originated the command to use the RTS-CTS protection to one-hop or two-hop neighborhood.

The BSSID of Commanding AP field may indicate the BSSID of the access node that originated the command to use the RTS-CTS mechanism. The wireless device receiving the frame may use the field to discover the access node that commanded the RTS-CTS protection to one-hop or two-hop neighborhood.

Figure 6 illustrates an embodiment of an apparatus comprising means for carrying out the above-mentioned functionalities of the wireless device, e.g. a terminal device, user equipment, or a client device. The wireless device may comply with specifications of an IEEE 802.11 network and/or another wireless network. The wireless device may also be a cognitive radio apparatus capable of adapting its operation to a changing radio environment, e.g. to changes in parameters of another system on the same frequency band. The wireless device may be or may be comprised in a computer (PC), a laptop, a tablet computer, a cellular phone, a palm computer, or any other apparatus provided with radio communication capability. In another embodiment, the apparatus carrying out the above-described functionalities of the wireless device is comprised in such a wireless device, e.g. the apparatus may comprise a circuitry, e.g. a chip, a chipset, a processor, a micro controller, or a combination of such circuitries in the wireless device.

Referring to Figure 6, the apparatus may comprise a communication controller circuitry 10 configured to control wireless communications in the wireless device. The communication controller circuitry 10 may configure the establishment, operation, and termination of connections or associations in the apparatus, as described above. The communication controller circuitry 10 may comprise a control part 12 handling control signalling communication with respect to transmission, reception, and extraction of control or management frames including beacon messages, request messages, response messages, scanning or probing messages, measurement reports, RTS messages, CTS messages, etc. The communication controller circuitry 10 may further comprise a data part 16 that handles transmission and reception of payload data when the apparatus is associated to one or more access nodes.

The communication control circuitry 10 may further comprise an RTS-CTS controller 14 configured to manage the use of the RTS-CTS mechanism in the apparatus. The RTS-CTS controller 14 may be configured to make decisions when to use the RTS-CTS mechanism before transmitting data frames. When the RTS-CTS controller 14 determines to use the RTS-CTS mechanism, it may cause the data part 16 to suspend data frame transmission until the control part 12 provides a signal that it has received a CTS frame as a response to an RTS frame transmitted by the control part 12. Upon receiving the signal from the control part, the RTS-CTS controller 14 may cause the data part to carry out frame transmission. In an embodiment, the control part 12 is configured to receive and extract the command to use the RTS-CTS mechanism for the data transmissions from an access node. Upon receiving the command, the RTS-CTS controller may reconfigure its policy to use the RTS-CTS mechanism such that the policy complies with the command after the reconfiguration. In embodiments where the command is bound to one or more conditions, the RTS-CTS controller 14 may reconfigure a conditions monitor circuitry 18 configured to monitor for conditions that trigger the use of the RTS-CTS mechanism. When the conditions monitor circuitry 18 indicates that the conditions associated with the command are satisfied, the RTS-CTS controller 14 may configure the control part 12 and the data part to carry out the data frame transmissions with the RTS-CTS mechanism. When the conditions monitor circuitry 18 determines that the conditions associated with the command are not satisfied, the conditions monitor circuitry 18 may monitor other conditions that trigger the use of the RTS-CTS mechanism. The other conditions may comprise conventional solutions for the use of the RTS-CTS mechanism, e.g. conditions determined independently by the RTS-CTS controller 14 such as data packet losses.

In an embodiment, the RTS-CTS controller may be configured to determine, on the basis of the observations of the conditions monitor circuitry 18, that the RTS-CTS mechanism shall be used. Additionally, the RTS-CTS controller 14 may determine to request the serving access node to mandate the use of the RTS-CTS mechanism in other wireless devices of the wireless network of the access node and/or wireless devices of other wireless networks. As a consequence, the RTS-CTS controller 14 may cause the control part 12 to transmit a control frame comprising the request.

The circuitries 12 to 18 of the communication controller circuitry 10 may be carried out by the one or more physical circuitries or processors. In practice, the different circuitries may be realized by different computer program modules. Depending on the specifications and the design of the apparatus, the apparatus may comprise some of the circuitries 12 to 18 or all of them.

The apparatus may further comprise the memory 20 that stores computer programs (software) 22 configuring the apparatus to perform the above-described functionalities of the wireless device. The memory 20 may also store communication parameters and other information needed for the wireless communications, e.g. the operational parameters of one or more access networks to which the apparatus has been associated, a database 24 storing conditions triggering the use of the RTS-CTS mechanism etc. The apparatus may further comprise radio interface components 26 providing the apparatus with radio communication capabilities within one or more wireless networks. The radio interface components 26 may comprise standard well-known components such as an amplifier, filter, frequency-converter, (de)modulator, and encoder/decoder circuitries and one or more antennas. The apparatus may in some embodiments further comprise a user interface enabling interaction with the user of the communication device. The user interface may comprise a display, a keypad or a keyboard, a loudspeaker, etc.

In an embodiment, the apparatus carrying out the embodiments of the invention in the wireless device comprises at least one processor 10 and at least one memory 20 including a computer program code 22, wherein the at least one memory and the computer program code are configured, with the at least one processor, to cause the apparatus to carry out the functionalities of the wireless device according to any one of the embodiments of Figures 2, 4, or 5. Accordingly, the at least one processor, the memory, and the computer program code form processing means for carrying out embodiments of the present invention in the wireless device.

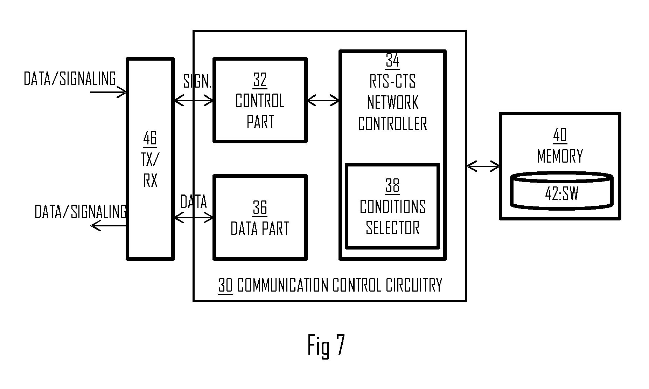

Figure 7 illustrates an embodiment of an apparatus comprising means for carrying out the above-mentioned functionalities of the access node. The access node may comply with specifications of an IEEE 802.11 network and/or another wireless network. The access node may support establishment of one or more access networks. The access node may also be a cognitive radio apparatus capable of adapting its operation to a changing radio environment, e.g. to changes in parameters of another system on the same frequency band. The access node may be or may be comprised in a computer (PC), a laptop, a tablet computer, a cellular phone, a palm computer, a base station or a fixed access point, or any other apparatus provided with radio communication capability. In another embodiment, the apparatus carrying out the above-described functionalities of the access node is comprised in such an access node, e.g. the apparatus may comprise a circuitry, e.g. a chip, a chipset, a processor, a micro controller, or a combination of such circuitries in the access node.

Referring to Figure 7, the apparatus may comprise a communication controller circuitry 30 configured to control wireless communications in the access node. The communication controller circuitry 10 may configure the establishment, operation, and termination of access networks in the access node and establishment, operation, and termination of connections or associations in each access network of the access node, as described above. The communication controller circuitry 30 may comprise a control part 32 handling control signalling communication with respect to transmission, reception, and extraction of control or management frames including beacon messages, request messages, response messages, scanning or probing messages, measurement reports, RTS messages, CTS messages, etc. The communication controller circuitry 30 may further comprise a data part 36 that handles transmission and reception of payload data with wireless devices associated to the access node through one or more access networks operated by the access node.

The communication control circuitry 30 may further comprise an RTS-CTS network controller 34 configured to control the use of the RTS-CTS mechanism in the wireless network of the access node and, in some embodiments, in neighbouring wireless networks, as described above. The RTS-CTS network controller 34 may comprise a conditions selector circuitry 38 as a sub-circuitry. The conditions selector circuitry 38 may monitor the performance of the wireless network, control or management frames received from wireless devices of the wireless network and/or from wireless devices of neighbouring network and determine the conditions for the RTS-CTS use. Upon determining to command the use of the RTS-CTS mechanism and, in some embodiments upon determining the conditions for the use of the RTS-CTS mechanism, the RTS-CTS network controller 34 may cause the control part 32 to transmit a frame comprising the command to use the RTS-CTS mechanism, thus mandating the use of the RTS-CTS mechanism in at least one wireless device receiving the frame.

The circuitries 32 to 38 of the communication controller circuitry 30 may be carried out by the one or more physical circuitries or processors. In practice, the different circuitries may be realized by different computer program modules. Depending on the specifications and the design of the apparatus, the apparatus may comprise some of the circuitries 32 to 38 or all of them.

The apparatus may further comprise the memory 40 that stores computer programs (software) 42 configuring the apparatus to perform the above-described functionalities of the access node. The memory 40 may also store communication parameters and other information needed for the wireless communications, e.g. the operational parameters of one or more access networks operated currently and/or previously by the access node, information on the pending commands to employ the RTS-CTS mechanism and optional conditions for the RTS-CTS use, etc. The apparatus may further comprise radio interface components 46 providing the apparatus with radio communication capabilities within one or more wireless networks. The radio interface components 46 may comprise standard well-known components such as an amplifier, filter, frequency-converter, (de)modulator, and encoder/decoder circuitries and one or more antennas. The apparatus may further comprise a second input/output interface (not shown) that provides a connection to the access network controller apparatus and the Internet, for example. The apparatus may in some embodiments further comprise a user interface enabling interaction with the user of the communication device. The user interface may comprise a display, a keypad or a keyboard, a loudspeaker, etc.

In an embodiment, the apparatus carrying out the embodiments of the invention in the access node comprises at least one processor 30 and at least one memory 40 including a computer program code 42, wherein the at least one memory and the computer program code are configured, with the at least one processor, to cause the apparatus to carry out the functionalities of the access node according to any one of the embodiments of Figures 2 to 5. Accordingly, the at least one processor, the memory, and the computer program code form processing means for carrying out embodiments of the present invention in the access node.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 2 to 5 may also be carried out in the form of one or more computer processes defined by one or more computer programs. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to wireless systems defined above but also to other suitable wireless communication systems. The protocols used, the specifications of the wireless communication systems, their network elements and terminal devices, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method comprising:
determining, by a first wireless device of a wireless network, that at least a second wireless device must transmit a request-to-send frame before transmitting a data frame; and
transmitting, in response to said determining, a frame comprising an information element commanding at least the second wireless device to transmit the request-to-send frame before transmitting a data frame.

2. The method of claim 1, wherein the frame comprises at least one information element specifying conditions in which the request-to-send frame must be transmitted before transmitting the data frame, wherein said conditions comprise at least one of a received signal strength being less than a determined threshold and a time interval during which the command for transmitting the request-to-send frame before the data frame is valid.

3. The method of any preceding claim, wherein the determining comprises detecting that at least one of the following exceeds a corresponding threshold: a number of wireless devices transmitting data traffic, number of overlapping wireless networks, number of transmitted frames within a determined time interval, number of transmission errors, a load of the wireless network, a load of another wireless network.

4. The method of any preceding claim, wherein the determining comprises detecting that colliding transmissions are performed.

5. The method of any preceding claim, wherein the determining comprises receiving a control frame from an access point of another wireless network, the control frame indicating that at least the second wireless device must transmit a request-to-send frame before transmitting the data frame.

6. The method of any preceding claim, wherein the frame comprises at least one of a beacon frame, a probe response frame, and an association response frame.

7. The method of any preceding claim, wherein said at least the second wireless device comprises all wireless devices of at least one wireless network.

8. A method comprising:
acquiring, in a first wireless device, a frame comprising an information element commanding transmission of a request-to-send frame before transmitting a data frame;
in response to detecting said information element, causing transmission of a data frame only after transmitting a request-to-send frame.

9. The method of claim 8, wherein the frame comprises at least one information element specifying conditions in which the request-to-send frame must be transmitted before transmitting the data frame, the method further comprising in the first wireless device: causing transmission of a data frame after transmitting a request-to-send frame only when said conditions are satisfied.

10. The method of claim 9, wherein said conditions comprise at least one of a received signal strength being less than a determined threshold and a time interval during which the command for transmitting the request-to-send frame before the data frame is valid, the method further comprising in the first wireless device: causing transmission of the data frame after transmitting the request-to-send frame only during the time interval.

11. An apparatus comprising:
at least one processor; and
at least one memory including a computer program code, wherein the at least one memory and the computer program code are configured, with the at least one processor, to cause the apparatus to:
determine that at least a second apparatus must transmit a request-to-send frame before transmitting a data frame in a wireless network; and
in response to said determining, cause transmission of a frame comprising an information element commanding at least the second apparatus to transmit the request-to-send frame before transmitting a data frame.

12. The apparatus of claim 11, wherein the apparatus further comprises means for performing the method of any preceding claim 2 to 7.

13. The apparatus of any preceding claim 11 to 12, wherein the apparatus is an access point of the wireless network.

14. An apparatus comprising:
at least one processor; and
at least one memory including a computer program code, wherein the at least one memory and the computer program code are configured, with the at least one processor, to cause the apparatus to:
acquire a frame comprising an information element commanding transmission of a request-to-send frame before transmitting a data frame;
in response to detecting said information element, causing transmission of a data frame only after transmitting a request-to-send frame.

15. The apparatus of claim 14, wherein the apparatus further comprises means for performing the method of any preceding claim 9 to 10.
